# EUROPEAN PATENT APPLICATION

(11) **EP 2 123 443 A1**
(43) Date of publication of application: **25.11.2009**
(21) Application number: 08405141.6
(22) Date of filing: 21.05.2008
(51) Int. Cl.: B32B 7/12, B32B 15/08, B32B 29/08, B32B 37/12, C08J 5/12, C09J 175/04

(54) **Process for manufacturing a flexible laminate for packaging**

(71) Applicant: Alcan Technology & Management Ltd., 8212 Neuhausen am Rheinfall (CH)
(72) Inventor: Bertolino, Noemi, 37138 Verona (IT); Nägeli, Hans-Rudolf, 8212 Neuhausen am Rheinfall (CH)

(57) **Abstract**

In a process for continuously manufacturing a flexible laminate (10) for food packagings at least one plastic film (12) and at least one further plastic film (20), metal foil (16) or paper as laminate layers are continuously coated with an adhesive (14, 18) and brought together to form a laminate (10). Subsequently, the laminate (10) is continuously irradiated in line in a microwave irradiation station (28) in order to cure the adhesive (14, 18). With the process according to the invention the curing time is significantly reduced in comparison to the standard thermal energy used nowadays and provided by a curing room warmed at 40 - 45 °C.

## Description

The invention relates to a process for manufacturing a flexible laminate for packaging, in which process at least one plastic film and at least one further plastic film, metal foil or paper as laminate layers are bonded together by means of polyurethane adhesive and subsequently energy is applied to the laminate to cure the adhesive.

In the manufacturing of flexible packaging laminates consisting of plastic films, aluminium foils or papers as laminate layers, mostly bi-component polyurethane adhesives are used in bonding together the individual laminate layers. After laminating these adhesives need to be stored up to more than 10 days in high temperature rooms at a temperature of 45 - 50 °C to reach a complete curing of the adhesive. These conditions apply particularly to packaging materials that have to withstand thermal cycle processes, as e.g. in retort applications. The curing phase leads to polymerization of the adhesive by cross-linking the isocyanate and the alcoholic groups of the adhesive components. Moreover all chemical reactions to create the bonding with the laminate layers take place.

The long curing time has a negative impact both on delivery time and storage capacity needed. Moreover, the conventional curing process requires a high energy consumption to maintain the required temperature. A fast curing solution would allow substantially reducing the time from laminating to shipping the laminate. An in line lamination and curing system would allow also avoiding the need of a high temperature curing room, adding an energy reduction benefit.

Curing of adhesives in line with the laminating process using electron beam technologies is known. However, electron beam curing technology requires adhesives that are not in any case approved to be used in contact with food.

The object of the invention is to provide a process of the kind describe at the start by means of which the time required for curing the adhesive in packaging laminates can be reduced in comparison with the adhesive curing time in conventional laminate manufacturing keeping the established polyurethane adhesives. Moreover, the process shall allow a continuous production of laminates.

That objective is achieved by way of the invention in that for curing the adhesive the laminate is irradiated by microwaves.

The energy needed for curing adhesive layers and the optimum frequency of the microwaves to irradiate the laminates are dependent on the thickness of the laminates and on the speed of the strip during the continuous laminating process. These parameters can easily be determined in simple experiments.

The laminate may additionally be heated.

The curing system according to the present invention allows speeding up the curing time without requiring special adhesive, but by using the polyurethane-based adhesives currently used in the market for food packaging applications.

The more effective microwave energy source can complete the polymerization, i.e. the adhesive curing, in a significantly shorter time in comparison to the standard thermal energy used nowadays and provided by a curing room warmed at 45 - 50°C.

A substantial advantage of the use of microwave energy for curing adhesives according to the present invention results in a significant reduction of curing time for polyurethane-based adhesives, especially used in high-performance laminate applications such as retort applications, without raw material technology or cost impact.

The use of a microwave heating for curing according to the present invention is particularly suitable in the continuous manufacture of laminates where the laminate layers are continuously coated with adhesive and brought together to form a laminate. Subsequently, the laminate is irradiated in line with energy to cure the adhesive. The irradiation process is preferably applied to a web in a roll to roll process or to a laminated reel.

The laminate layers preferably include plastic films of polyester, polyamide, polyvinylchloride, polypropylene or polyethylene, aluminium foils or paper.

Preferably the adhesive is a bi-component polyurethane adhesive composed of cross-linking isocyanates and high-molecule alcohols.

Bi-component polyurethane adhesives are formed by chemical reactions between the isocyanate and alcoholic components. The chemical reactions start during the lamination phase and are concluded during the curing phase. The chemical reactions include the condensation reaction of the OH-group with NCO-groups of the two adhesive components and the reaction with the plastic, metallic and paper support to give the bond strength required within the laminate layers. As the two components of bi-component polyurethane adhesive, i.e. the NCO- and the OH-groups of the two components, can absorb microwave energy, the chemical reactions immediately start in warming up the whole laminate with fast kinetic and without energy dispersion.

The applied microwave energy is preferably non-ionizing microwave radiation with a frequency between 300 MHz and 300 GHz corresponding to a wavelength of 1 m to 1 mm, preferably a radiation of 2,45 GHz, corresponding to a wavelength of 12,24 cm, or 915 MHz, corresponding to a wavelength of 32,7 cm.

A preferential use of laminated packaging material produced with the process according to the present invention are food and pharma packaging applications.

Preferred laminated packaging material for food and pharma applications are
characterized by two or more layers, preferably
PET film / adhesive / aluminium foil / adhesive/PP, or
PET film / adhesive / oPA /adhesive / PP, or
oPA film / adhesive / aluminium foil / adhesive / PVC.

The aforementioned laminated packaging material is suitable for undergoing heat treatment under retort conditions. Therefore, the laminate packaging material is qualified for packaging products under pasteurisation or sterilisation (retort) conditions.

Further advantages, features and details of the invention are revealed in the following description of preferred exemplary embodiments and with the aid of the drawing, which shows schematically in
- Fig. 1: the cross-section through a packaging laminate according to line I-I in Fig. 2;
- Fig. 2: the manufacture of the packaging laminate of Fig. 1.

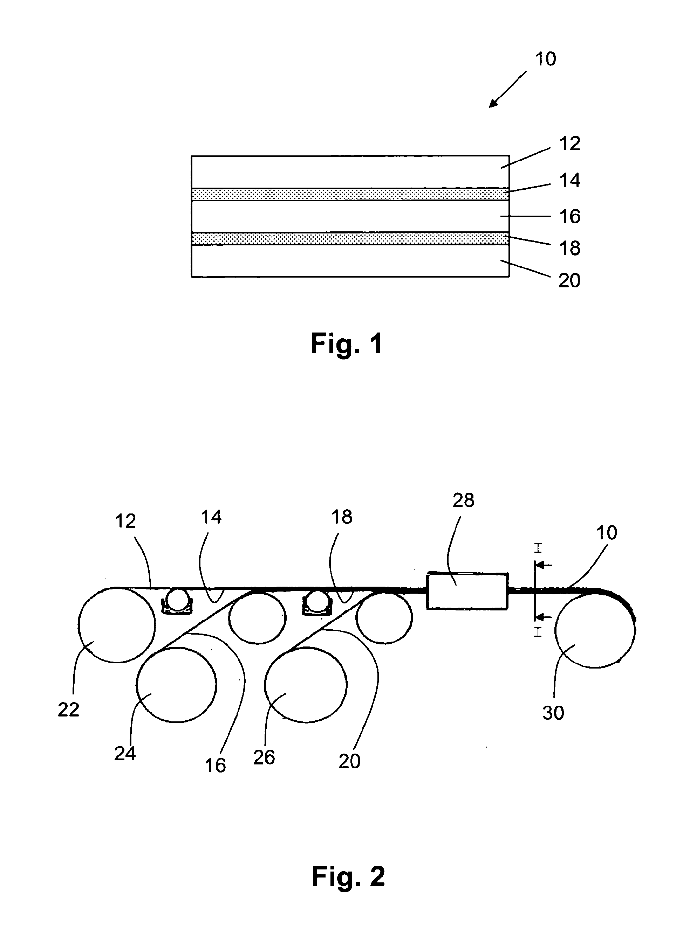

Fig. 1 shows a packaging laminate 10 which could e.g. be used for manufacturing self-standing pouches for drinks, featuring a printed PET film 12 representing the outer side, an aluminium foil 16 as barrier layer and a sealable PE film 20 representing the inner side. The PET film 12 is permanently bonded to the aluminium foil 16 by way of a first adhesive layer 14 consisting of bi-component polyurethane adhesive, and the aluminium foil 16 is permanently bonded to the PE sealing film 20 by way of a second adhesive layer 18 of bi-component polyurethane adhesive. In a typical packaging laminate 10 the thickness of the PET film is e.g. 12 µm, the thickness of the aluminium foil 8-10 µm and the thickness of the sealing layer 90-100 µm.

Fig. 2 shows the manufacture of the laminate 10 as shown in Fig. 1 by way of a three-fold lamination which takes place by bringing together the PET film 12, the aluminium foil 16 and the PE sealing film 20 and adhesively bonding together the laminate layers via the two adhesive layers 14, 18 in one single pass. The printed PET film 12 is uncoiled from a first spool 22 and coated continuously with adhesive 14. The aluminium foil 16 is fed in strip-form from a second spool 24 to the PET film 12 coated with adhesive 14 and laminated continuously to the PET film 12 to form a partial laminate. The PE sealing film 20 is uncoiled from a third spool 26 and coated with adhesive 18, fed in strip-form to the partial laminate and laminated to the partial laminate in a continuous manner building the packaging laminate 10. The packaging laminate 10 passes through a microwave irradiation station 28 with adequate capacity enabling both adhesive layers 14, 18 to be cured by microwave irradiation within a fraction of a second in one single pass. On leaving the microwave irradiation station 28 the packaging laminate 10 is coiled onto a fourth spool 30 and is ready for further processing to packaging.

In the following, examples of laminates particularly suitable for food packagings are listed. The adhesives bonding together the individual laminate layers are bi-component polyurethane adhesives.

### Examples of laminates

Polyester/adhesive/polyamide/adhesive/polypropylene
Polyester/adhesive/polyamide/adhesive/polyethylene
Polyester/adhesive/polyester/adhesive/polypropylene
Polyester/adhesive/polyamide/adhesive/polyethylene
Polyester/adhesive/aluminium/adhesive/polypropylene
Polyester/adhesive/aluminium/adhesive/polypropylene
Polyester/adhesive/polypropylene
Polyester/adhesive/polyester/adhesive/polyamide/adhesive/polypropylene
Polyester/adhesive/polyester/adhesive/polyamide/adhesive/polyethylene
Polyester/adhesive/aluminium/adhesive/polyamide/adhesive/polypropylene

### List of Reference Numerals

- 10: laminate
- 12: PET film
- 14: polyurethane adhesive layer
- 16: aluminium foil
- 18: polyurethane adhesive layer
- 20: PE sealing film
- 22: first spool
- 24: second spool
- 26: third spool
- 28: microwave irradiation station
- 30: fourth spool

## Claims

1. Process for manufacturing a flexible laminate (10) for packaging, in which process at least one plastic film (12) and at least one further plastic film (20), metal foil (16) or paper as laminate layers are bonded together by means of polyurethane adhesive (14, 18) and subsequently energy is applied to the laminate (10) to cure the adhesive (14, 18),
**characterised in that**
the laminate (10) is irradiated by microwaves.

2. Process according to claim 1, **characterised in that** the laminate (10) is additionally heated.

3. Process according to claim 1 or 2, **characterised in that** the laminate layers (12, 16, 20) are continuously coated with adhesive (14, 18) and brought together to form a laminate (10) and subsequently the laminate (10) is continuously irradiated with energy.

4. Process according to one of claims 1 to 3, **characterised in that** the irradiation process is applied to a web in a roll to roll process.

5. Process according to one of claims 1 to 3, **characterised in that** the irradiation process is applied to a laminated reel.

6. Process according to one of claims 1 to 5, **characterised in that** the laminate layers (12, 16, 20) include plastic films of polyester, polyamide, polyvinylchloride, polypropylene or polyethylene, aluminium foil or paper.

7. Process according to one of claims 1 to 6, **characterized in that** the adhesive is a bi-component polyurethane adhesive (14, 18) composed of cross-linked isocyanates and high-molecular alcohols.

8. Process according to one of claims 1 to 7, **characterized in that** the applied microwave energy is non-ionizing microwave radiation with a frequency between 300 MHz and 300 GHz, preferable a radiation of 2,45 GHz or 915 MHz.

9. Laminated packaging material produced with the process according to one of claims 1 to 8 for food and pharma packaging applications.

10. Laminated packaging material according to claim 9, **characterized by** two or more layers, preferably
PET film / adhesive / aluminium foil / adhesive/PP, or
PET film / adhesive / oPA /adhesive / PP, or
oPA film / adhesive / aluminium foil / adhesive / PVC.

11. Use of a laminated packaging material according to claim 9 or 10 for retort applications.
